(19) **Europäisches Patentamt**
**European Patent Office**
**Office européen des brevets**

(11) **EP 4 596 728 A1**

(12) **EUROPEAN PATENT APPLICATION**
published in accordance with Art. 153(4) EPC

(43) Date of publication:
**06.08.2025 Bulletin 2025/32**

(21) Application number: **23872597.2**

(22) Date of filing: **29.09.2023**

(51) International Patent Classification (IPC):
*C21D 8/12* (2006.01)   *C22C 38/00* (2006.01)
*C22C 38/60* (2006.01)   *H01F 1/147* (2006.01)

(52) Cooperative Patent Classification (CPC):
**C22C 38/00; C22C 38/60; H01F 1/147;** C21D 8/12;
Y02P 10/20

(86) International application number:
**PCT/JP2023/035618**

(87) International publication number:
**WO 2024/071378 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.09.2022 JP 2022157340**

(71) Applicant: **NIPPON STEEL CORPORATION**
**Chiyoda-ku**
**Tokyo 100-8071 (JP)**

(72) Inventors:
• **ICHIE, Takeru**
**Tokyo 100-8071 (JP)**
• **FUJII, Yuya**
**Tokyo 100-8071 (JP)**
• **MURAKAMI, Fuminobu**
**Tokyo 100-8071 (JP)**

(74) Representative: **Vossius & Partner**
**Patentanwälte Rechtsanwälte mbB**
**Siebertstrasse 3**
**81675 München (DE)**

(54) **NON-ORIENTED ELECTROMAGNETIC STEEL SHEET**

(57)    This non-oriented electrical steel sheet includes a steel sheet, in which the steel sheet contains, as a chemical composition, in % by mass, C: 0.0030% or less, Si: 1.0 to 3.5%, Al: 0.10 to 2.00%, Mn: 0.1 to 2.0%, P: 0.20% or less, S: 0.0030% or less, N: 0.0030% or less, Ti: 0.0030% or less, B: 0.0020% or less, Sn: 0 to 0.200%, Sb: 0 to 0.1000%, and a remainder: Fe and impurities, when a Sn content is represented by [Sn] and an Sb content is represented by [Sb] in % by mass, [Sn] +2× [Sb] ≤ 0.200 is satisfied, and when a sheet width of the steel sheet is represented by W, WH/WL, which is a ratio between a maximum value WH and a minimum value WL of iron loss W10/400 at a W/10 part which is a part at a W/10 position, a W/4 part which is a part at a W/4 position, and a W/2 part which is a part at a W/2 position of the sheet width from an end portion in a width direction, is 1.10 or less.

EP 4 596 728 A1

**Description**

Technical Field

The present invention relates to a non-oriented electrical steel sheet.
Priority is claimed on Japanese Patent Application No. 2022-157340, filed September 30, 2022, the content of which is incorporated herein by reference.

Background Art

In the field of motors, particularly in the field of electrical equipment such as compressors, medium-to-small transformers, and electrical components of air conditioners and refrigerators, there is an increasing demand for higher efficiency and miniaturization of motors in a global environmental conservation movement represented by global power reduction, energy saving, reduction in $CO_2$ emission, and the like.
In the field of automobiles, a non-oriented electrical steel sheet is used as a core for a drive motor of a hybrid drive vehicle or an electric vehicle. Since domestic and foreign automobile manufacturers publicly declare an increase in manufacture of the above electric drive vehicles, a demand for a non-oriented electrical steel sheet to be used is largely increasing.
In such a background, similarly to improvement of magnetic characteristics, uniformizing magnetic characteristics of a steel sheet in a width direction, in a non-oriented electrical steel sheet used as a core material of a motor, is also an important problem. This is because, due to a deviation of the magnetic characteristics in the width direction, torque called cogging torque during motor rotation is generated, and the rotation becomes jerky, which leads to noise during motor rotation. On the other hand, in order to avoid the generation of the cogging torque, there is a problem that it is necessary to shorten the length of a hoop that can be collected from a coil.
As a method for improving magnetic characteristics of a non-oriented electrical steel sheet, conventionally, a method for adding an alloying element such as Si, a method for reducing impurity elements such as C, S, and N, and a method for controlling an annealing temperature in a final annealing process after cold rolling to control a grain size to an appropriate grain size are known. At the time of the final annealing, when the annealing temperature is high, residual strain affecting magnetic characteristics is generated in a cooling step after annealing. This strain hinders movement of a magnetic domain wall when a magnetic field is applied, and thus affects magnetic characteristics. This residual strain varies in the width direction, whereby a deviation occurs in the magnetic characteristics in the width direction.
In a case of a general-purpose product of a non-oriented electrical steel sheet, the final annealing temperature is low. Therefore, a cooling rate after the final annealing is low, and the amount of residual strain introduced into the steel sheet is small. As a result, the deviation of the magnetic characteristics in the width direction is small. On the other hand, in a case of a high-grade product, it is necessary to increase the final annealing temperature in order to reduce iron loss through coarsening of grain size, and the cooling rate of the non-oriented electrical steel sheet is increased. Therefore, the amount of residual strain introduced into the steel sheet increases, and variation occurs in the width direction. As a result, the deviation of the magnetic characteristics in the width direction increases.
In order to solve such a problem, Patent Document 1 discloses a method for manufacturing a non-oriented electrical steel sheet having less in-plane anisotropy at low cost. Patent Document 1 discloses that a non-oriented electrical steel sheet in which magnetic characteristics at each angle from a rolling direction to a width direction of the sheet are uniformly controlled is obtained.
However, in Patent Document 1, in order to achieve the above object, it is premised that rapid heating is performed in final annealing, and $\gamma$ transformation occurs in an achieving temperature range of an Ac3 point or higher by the rapid heating. That is, a target is limited to a component of a transformation system (component system in which $\alpha \rightarrow \gamma$ transformation occurs by heating).
In addition, Patent Document 2 discloses a method for manufacturing an electrical steel sheet having uniform magnetic characteristics in a coil width direction, in which when an electrical steel sheet is manufactured by a series of steps including a hot rolling step in which a slab for an electrical steel sheet is subjected to hot rough rolling, then an obtained sheet bar is coiled into a coil, and then subjected to finish rolling while being uncoiled, a cold rolling step in which a final sheet thickness is obtained by one time cold rolling or two or more times of cold rolling sandwiching intermediate annealing therebetween, and a magnetism treatment step in which final magnetic characteristics are expressed in a product by primary recrystallization annealing or primary recrystallization annealing and secondary recrystallization annealing, at the rough rolling stage of the hot rolling step, the sheet thickness in a width direction is controlled such that the sheet thickness of the sheet bar at an end portion in the width direction and the sheet thickness at a center portion in the width direction satisfy a predetermined relationship, and then the sheet bar is coiled.
However, in Patent Document 2, it is necessary to coil the sheet bar after the hot rough rolling, and an increase in the number of steps is a problem. **In** addition, control of a deviation of magnetic characteristics in a sheet width direction is not sufficient.

Citation List

Patent Document

Patent Document 1
Japanese Unexamined Patent Application, First Publication No. H07-054052
Patent Document 2
Japanese Unexamined Patent Application, First Publication No. H09-316536

Summary of Invention

Technical Problem

**In** prior art, in a non-oriented electrical steel sheet having a chemical composition of non-transformation system ($\alpha \rightarrow \gamma$ transformation does not occur by heating), a deviation of magnetic characteristics in a sheet width direction is not sufficiently controlled. Therefore, there is a demand for a technique capable of uniformizing magnetic characteristics without increasing the number of steps.
In view of the above demand, an object of the present invention is to provide a non-oriented electrical steel sheet which contains Si in an amount of 1.0% or more and 3.5% or less and having a high soaking temperature of 850°C or higher (that is, low iron loss is required) in final annealing and which has good magnetic characteristics and a small deviation of magnetic characteristics in a width direction.

Solution to Problem

**In** order to solve the above problems, the present inventors have conducted intensive studies on the influence of a chemical composition and manufacturing conditions on a deviation of magnetic characteristics in a width direction. As a result, the present inventors have found that the deviation of magnetic characteristics of a steel sheet in a width direction can be reduced by controlling the distribution of precipitates in the width direction by controlling a cooling rate, and controlling the length between hearth rolls in a soaking area, the tension applied to the steel sheet, and the cooling rate after final annealing in a final annealing step.
The present invention has been made on the basis of the above-described findings, and a gist thereof is as follows.
[1] A non-oriented electrical steel sheet according to an aspect of the present invention includes a steel sheet, in which the steel sheet contains, as a chemical composition, in % by mass, C: 0.0030% or less, Si: 1.0 to 3.5%, Al: 0.10 to 2.00%, Mn: 0.1 to 2.0%, P: 0.20% or less, S: 0.0030% or less, N: 0.0030% or less, Ti: 0.0030% or less, B: 0.0020% or less, Sn: 0 to 0.200%, Sb: 0 to 0.1000%, and a remainder: Fe and impurities, when a Sn content is represented by [Sn] and an Sb content is represented by [Sb] in % by mass, the following formula (1) is satisfied, and when a sheet width of the steel sheet is represented by W, WH/WL, which is a ratio between a maximum value WH and a minimum value WL of iron loss W10/400 at a W/10 part, a W/4 part, and a W/2 part which are a part at a W/10 position, a part at a W/4 position, and a part at a W/2 position of the sheet width from an end portion in a width direction respectively, is 1.10 or less.

$$[Sn] + 2 \times [Sb] \leq 0.200 \quad (1)$$

[2] In the non-oriented electrical steel sheet according to [1], the [Sn] and the [Sb] may satisfy the following formula (2).

$$0.020 \leq [Sn] + 2 \times [Sb] \leq 0.200 \quad (2)$$

[3] In the non-oriented electrical steel sheet according to [1] or [2], an insulating coating may be formed on a surface of the steel sheet.

Advantageous Effects of Invention

According to the above aspect of the present invention, it is possible to manufacture a non-oriented electrical steel sheet having a chemical composition of a transformation system or a non-transformation system, having good magnetic characteristics, and having a small deviation of magnetic characteristics in a width direction.

Brief Description of Drawings

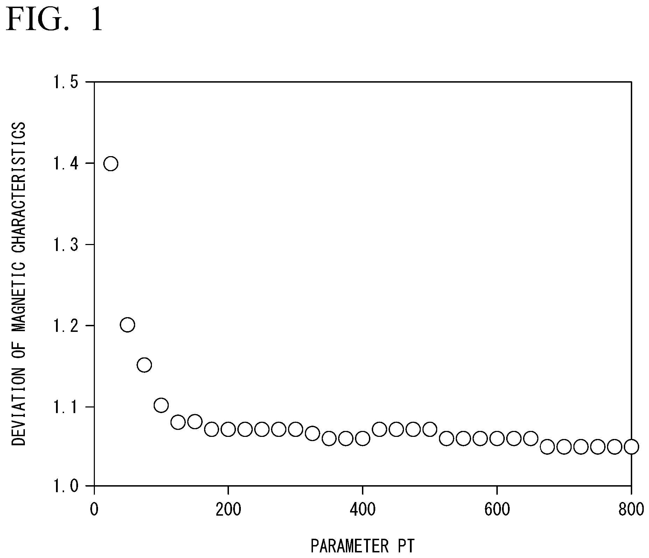

FIG. 1 is a diagram illustrating a relationship between a parameter PT and a deviation of magnetic characteristics in a width direction in a soaking area of a final annealing furnace.

Description of Embodiments

A non-oriented electrical steel sheet according to an embodiment of the present invention (hereinafter, also referred to as an "electrical steel sheet according to the present embodiment") will be described. The electrical steel sheet according to the present embodiment includes a steel sheet. The electrical steel sheet according to the present embodiment may consist of a steel sheet, but may include an insulating coating on a surface (one surface or both surfaces) of the steel sheet.

In addition, in the electrical steel sheet according to the present embodiment, the steel sheet contains, as a chemical composition, in % by mass, C: 0.0030% or less, Si: 1.0 to 3.5%, Al: 0.10 to 2.00%, Mn: 0.1 to 2.0%, P: 0.20% or less, S: 0.0030% or less, N: 0.0030% or less, Ti: 0.0030% or less, B: 0.0020% or less, Sn: 0 to 0.200%, Sb: 0 to 0.1000%, and a remainder: Fe and impurities, when a Sn content is represented by [Sn] and an Sb content is represented by [Sb] in % by mass, $[Sn] + 2 \times [Sb] \leq 0.200$ is satisfied, and when a sheet width of the steel sheet is represented by W, WH/WL, which is a ratio between a maximum value WH and a minimum value WL of iron loss W10/400 at a W/10 part, a W/4 part, and a W/2 part which are a part at a W/10 position, a part at a W/4 position, and a part at a W/2 position of the sheet width from an end portion in a width direction respectively, is 1.10 or less.

Hereinafter, the electrical steel sheet according to the present embodiment and a method for manufacturing the electrical steel sheet will be described.

<Steel sheet>

A steel sheet (also referred to as a base steel sheet) included in the non-oriented electrical steel sheet will be described.

[Chemical composition]

A reason for limiting a chemical composition of a steel sheet included in the electrical steel sheet according to the present embodiment (which can be also said to be a chemical composition of the non-oriented electrical steel sheet when the non-oriented electrical steel sheet includes only the steel sheet) will be described. "%" relating to the content of each element constituting the chemical composition means "% by mass" unless otherwise specified.

C: 0.0030% or less

C is an element that causes magnetic aging and increases iron loss. In addition, C is an element having a large influence on a deviation of magnetic characteristics. Therefore, a C content is 0.0030% or less. The C content is preferably 0.0025% or less, and more preferably 0.0020% or less.

The C content is preferably as small as possible, and may be 0%. However, the C content may be 0.0005% or more because an excessive reduction in the C content leads to an increase in cost.

Si: 1.0 to 3.5%

Si is an element that increases electric resistance of the steel sheet, reduces eddy-current loss, and reduces iron loss. In addition, Si is an element having a large influence on a deviation of magnetic characteristics. When an Si content is less than 1.0%, electric resistance of the steel sheet does not increase and iron loss does not decrease. Therefore, the Si content is 1.0% or more. The Si content is preferably 1.8% or more, and more preferably 2.0% or more.

On the other hand, when the Si content exceeds 3.5%, magnetic flux density and punching workability are significantly reduced, and manufacturing cost increases. Therefore, the Si content is 3.5% or less. The Si content is preferably 3.3% or less, and more preferably 3.2% or less.

Al: 0.10 to 2.00%

Al is an element that is unavoidably mixed from an ore or a refractory, but contributes to deoxidation, and increases electric resistance to reduce eddy-current loss and to reduce iron loss similarly to Si.

When an Al content is less than 0.10%, fine AlN is formed to adversely affect iron loss, and thus the Al content is 0.10% or more. The Al content is preferably 0.20% or more, and more preferably 0.50% or more.

On the other hand, when the Al content exceeds 2.00%, saturation magnetic flux density decreases and magnetic flux density decreases, and thus the Al content is 2.00% or less. The Al content is preferably 1.50% or less, and more preferably 1.20% or less.

Mn: 0.1 to 2.0%

Mn is an element that increases electric resistance, reduces eddy-current loss, and suppresses precipitation of a fine sulfide such as MnS, which is harmful to growth of grains.

When the Mn content is less than 0.1%, the effect cannot be sufficiently obtained. Therefore, the Mn content is 0.1% or more. The Mn content is preferably 0.2% or more, and more preferably 0.4% or more.

On the other hand, when the Mn content exceeds 2.0%, growth of grains during annealing decreases, and iron loss increases. Therefore, the Mn content is 2.0% or less. The Mn content is preferably 1.5% or less, and more preferably 1.2% or less.

P: 0.20% or less

When the P content exceeds 0.20%, toughness of the steel sheet is reduced and the steel sheet is likely to be fractured. Therefore, the P content is 0.20% or less. The P content is preferably 0.15% or less, and more preferably 0.12% or less. The lower limit of the P content is not particularly limited (may be 0%), but 0.001% is a substantial lower limit in consideration of manufacturing cost.

S: 0.0030% or less

S is an element that forms a fine sulfide such as MnS and inhibits recrystallization and grain growth during final annealing or the like. When a S content exceeds 0.0030%, recrystallization and grain growth during final annealing or the like are significantly inhibited, and magnetic characteristics are deteriorated. Therefore, the S content is 0.0030% or less. The S content is preferably 0.0020% or less, and more preferably 0.0015% or less. The lower limit of the S content is not particularly limited (may be 0%), but 0.0001% is a lower limit in consideration of an industrial purification technique, and 0.0003% is a substantial lower limit in consideration of manufacturing cost.

N: 0.0030% or less

N is an element that forms a precipitate and increases iron loss. When the N content exceeds 0.0030%, iron loss significantly increases. Therefore, the N content is 0.0030% or less. The N content is preferably 0.0020% or less, and more preferably 0.0015% or less. The lower limit of the N content is not particularly limited (may be 0%), but 0.0005% is a substantial lower limit in consideration of manufacturing cost.

Ti: 0.0030% or less

Ti is an element that forms a precipitate and increases iron loss. When the Ti content exceeds 0.0030%, iron loss significantly increases, and thus the Ti content is 0.0030% or less. The Ti content is preferably 0.0020% or less, and more preferably 0.0015% or less. The lower limit of the Ti content is not particularly limited (may be 0%), but 0.0005% is a substantial lower limit in consideration of manufacturing cost.

B: 0.0020% or less

B is an element that forms a precipitate and increases iron loss. When the B content exceeds 0.0020%, iron loss significantly increases. Therefore, the B content is 0.0020% or less. The B content is preferably 0.0010% or less, and more preferably 0.0005% or less. The lower limit of the B content is not particularly limited (may be 0%), but 0.0001% is a substantial lower limit in consideration of an industrial purification technique.

Sn: 0 to 0.200%

Sb: 0 to 0.1000%

Sn and Sb are elements that suppress surface nitriding and also contribute to reduction of iron loss. Therefore, in the electrical steel sheet according to the present embodiment, one or two of Sn and Sb may be contained in the chemical composition of the steel sheet.

Sn and Sb are elements having similar effects, but there is a difference in the degree of influence therebetween. Therefore, when the Sn content is represented by [Sn] and the Sb content is represented by [Sb] in % by mass, a range of [Sn] + 2 × [Sb] is controlled.

Specifically, in a case of obtaining an effect of improving magnetic characteristics, [Sn] + 2 × [Sb] is preferably 0.020 or more. [Sn] + 2 × [Sb] is more preferably 0.050 or more.

On the other hand, when [Sn] + 2 × [Sb] exceeds 0.200, toughness of the steel sheet is deteriorated. Therefore, [Sn] + 2 × [Sb] is 0.200 or less. [Sn] + 2 × [Sb] is preferably 0.100 or less.

The Sn content is 0 to 0.200% and the Sb content is 0 to 0.1000% as a range satisfying [Sn] + 2 × [Sb] ≤ 0.200.

Remainder: Fe and impurities

**In** the electrical steel sheet according to the present embodiment, a remainder excluding the above elements may be Fe and impurities. The impurity is an element that is mixed from a steel raw material and/or in a steelmaking process and is allowed as long as characteristics of the electrical steel sheet according to the present embodiment are not impaired.

On the other hand, other elements may be further contained instead of a part of Fe. For example, Cu or Ni may be contained as long as the amount of each of Cu and Ni does not exceed 0.1%. Another element may also be contained in a range not exceeding 0.05%.

It is only required to measure the chemical composition of the steel sheet by a general analysis method of steel. For example, it is only required to measure the chemical composition using inductively coupled plasma-atomic emission spectrometry (ICP-AES). Specifically, the chemical composition is specified by measuring a test piece collected from the steel sheet with a predetermined measuring device under a condition based on a calibration curve prepared in advance. C and S may be measured using a combustion-infrared absorption method, and N may be measured using an inert gas fusion-thermal conductivity method.

When the steel sheet has an insulating coating on a surface thereof, the steel sheet may be subjected to analysis after the insulating coating is mechanically removed by a minitor or the like.

<WH/WL (deviation of magnetic characteristics) which is a ratio between a maximum value WH and a minimum value WL of iron loss W10/400: 1.10 or less>

The electrical steel sheet according to the present embodiment has a small deviation of magnetic characteristics of the steel sheet in the width direction. Specifically, when a sheet width of the steel sheet included in the non-oriented electrical steel sheet is represented by W, W10/400 (a measured value of iron loss at 400 Hz at a magnetic flux density of 1.0 T) is measured by a single sheet tester method (SST method) defined in JISC2556:2015 at a W/10 part, a W/4 part, and a W/2 part which are a part at a W/10 position, a part at a W/4 position, and a part at a W/2 position of the sheet width from an end portion in a width direction, respectively, and WH/WL (deviation of magnetic characteristics), which is a ratio between a maximum value WH and a minimum value WL of W10/400, is obtained, WH/WL is 1.10 or less.

In a case where WH/WL exceeds 1.10, cogging torque, that is, rotation unevenness increases and sound during rotation increases when the non-oriented electrical steel sheets are stacked to form a motor, which is not preferable. Therefore, by controlling the deviation WH/WL of magnetic characteristics to 1.10 or less, cogging torque, that is, rotation unevenness can be reduced, and sound during rotation can be reduced (for example, 40 db or less).

It is considered that suppression of the deviation of the magnetic characteristics in the width direction is achieved by, for example, controlling the distribution of inclusions or a state of strain in a minute region. However, it is not easy to accurately evaluate these, and therefore in the electrical steel sheet according to the present embodiment is characterized by the WH/WL.

**In** addition, in the present embodiment, the ratio between the maximum value WH and the minimum value WL of W10/400 is defined instead of another value of iron loss such as W15/50. Although W10/400 is a characteristic required for a device assumed to be used, W10/400 is easily affected by residual strain. Therefore, it is more difficult to control W10/400 than another iron loss value such as W15/50, and variation of W10/400 tends to be large. Therefore, for example, even when the ratio between the maximum value and the minimum value of W15/50 is 1.10 or less, WH/WL is not necessarily 1.10 or less.

Measurement of W10/400 by a single sheet tester method (SST method) defined in JISC2556:2015 at a W/10 part means that a sample having a size of 55 mm square is collected such that the sample includes the W/10 part, and W10/400 is measured by the SST method using the sample. The same applies to measurements at a W/4 part and a W/2 part.

In addition, in the electrical steel sheet according to the present embodiment, the deviation of the magnetic characteristics in the width direction is preferably small even in a case of a lower magnetic field.

For example, when W5/400 is measured by the SST method defined in JISC2556:2015 at a W/10 part, a W/4 part, and a W/2 part and WH2/WL2 (deviation of magnetic characteristics), which is a ratio between a maximum value WH2 and a minimum value WL2 of W5/400, is obtained, WH2/WL2 is preferably 1.10 or less.

WH2/WL2 can be measured in a similar manner to WH/WL.

As the width (sheet width) of the steel sheet is larger, the deviation of the magnetic characteristics in the width direction tends to be larger. However, in the electrical steel sheet according to the present embodiment, at least when the width is 1000 mm or less, the deviation of the magnetic characteristics can be reduced as described above. By performing more strict control, the deviation of the magnetic characteristics can be reduced when the width is 1300 mm or less.

<Insulating coating>

**In** the electrical steel sheet according to the present embodiment, an insulating coating may be formed on a surface of the steel sheet.

This insulating coating may be a known coating. For example, a coating made of $Al_2O_3$ is an exemplary example.

<Method for manufacturing non-oriented electrical steel sheet>

A method for manufacturing the electrical steel sheet according to the present embodiment is not particularly limited, but a method including the following steps and performing each of the steps under preferable conditions is preferable.

(I) a hot rolling step of heating and hot rolling a slab to obtain a hot rolled sheet;
(II) a hot-rolled sheet annealing step of annealing the hot rolled sheet (coil);
(III) a cold rolling step of pickling and cold-rolling the hot rolled sheet after the hot-rolled sheet annealing step to obtain a cold rolled sheet; and
(IV) a final annealing step of performing final annealing on the cold rolled sheet.
The method may further include the following step.
(V) an insulating coating forming step of forming an insulating coating on the steel sheet (non-oriented electrical steel sheet) after the final annealing step.

Preferred conditions for each of the steps will be described below. To conditions that are not described, known conditions can be applied.

[Hot rolling step]

**In** the hot rolling step, a slab is heated, hot-rolled to obtain a hot rolled sheet, and coiled into a coil shape.

A chemical composition of the slab may be determined to be used according to a chemical composition of a steel sheet included in a non-oriented electrical steel sheet to be finally obtained.

The heating temperature of the slab is preferably 1050 to 1250°C. When the heating temperature is lower than 1050°C, the coiling temperature at which the hot rolled sheet is coiled into a coil shape cannot be ensured to a certain temperature or higher, and as a result, magnetic characteristics of a product may be deteriorated. On the other hand, when the heating temperature exceeds 1250°C, precipitates excessively form a solid solution and are finely precipitated during hot rolling, whereby iron loss of a product may be deteriorated. The slab heating temperature is more preferably 1100 to 1200°C.

The temperature during passing through a final stand of finish rolling in the hot rolling (finish rolling temperature) is preferably in a range of 800 to 1000°C. This is because it is difficult to set the coiling temperature into a coil to a range described later outside this range. The finish rolling temperature is more preferably 820 to 950°C, and still more preferably 900 to 1000°C.

The sheet thickness of the hot rolled sheet is preferably 1.6 to 2.8 mm because when the sheet thickness is too large, magnetic characteristics of a product sheet are deteriorated, and when the sheet thickness is too small, a required temperature cannot be ensured. The sheet thickness is more preferably 1.8 to 2.5 mm.

The coiling temperature into a coil in hot rolling is preferably in a range of 650 to 900°C. When the coiling temperature is lower than 650°C, there is a concern that the finish rolling temperature decreases and the rolling load increases. When the coiling temperature exceeds 900°C, a surface of the coil may be oxidized to deteriorate an appearance. The coiling temperature is more preferably 680 to 850°C, and still more preferably 700 to 800°C.

[Hot-rolled sheet annealing step]

In the hot-rolled sheet annealing step, the hot rolled sheet that has been hot-rolled is annealed (hot rolled sheet-annealed). A soaking temperature is preferably 850 to 1000°C. When the soaking temperature is lower than 850°C, magnetic characteristics may be deteriorated. On the other hand, when the soaking temperature exceeds 1000°C, toughness may decrease. The soaking temperature is more preferably in a range of 900°C to 950°C. A soaking time is preferably 10 to 180 seconds. The soaking time is more preferably 15 to 120 seconds in consideration of magnetic characteristics and productivity. The annealing may be performed in a coil shape, or may be performed after uncoiling as necessary.

[Cold rolling step]

The hot rolled sheet after the hot-rolled sheet annealing step is uncoiled from the coil shape, subjected to a pickling step under known conditions, and then cold-rolled. The cold rolling may be one time (a series of) cold rolling in which intermediate annealing is not performed, or may be two or more times of cold rolling sandwiching intermediate annealing therebetween.
The sheet thickness of the cold rolled sheet after the cold rolling step (equivalent to that of a base steel sheet as a final product) is preferably 0.20 to 0.50 mm from a viewpoint of magnetic characteristics. Furthermore, in consideration of productivity, the sheet thickness of the cold rolled sheet is more preferably in a range of 0.25 to 0.50 mm.
A total rolling ratio in a final cold rolling step is preferably 75 to 90% from a viewpoint of magnetic characteristics, and more preferably 80 to 88% in consideration of both magnetic characteristics and productivity.

[Final annealing step]

In the final annealing step, the steel sheet (cold rolled sheet) after the cold rolling is subjected to final annealing.
Heating conditions in the final annealing step are not particularly limited. The soaking temperature during the final annealing is preferably 950 to 1100°C, and more preferably in a range of 1000 to 1100°C from the viewpoint of magnetic characteristics. As for the annealing time, the soaking time is preferably 10 to 180 seconds. In consideration of magnetic characteristics and productivity, the soaking time is more preferably 15 to 60 seconds.
In the final annealing step, annealing is performed by a continuous annealing furnace, and final annealing is performed such that $PT = W \times t \times L \times T/Vc > 100$ is satisfied, in which W (mm) represents the sheet width of a cold rolled sheet to be subjected to final annealing, t (mm) represents the sheet thickness of the cold rolled sheet, L (m) represents the length between hearth rolls in a soaking area in the continuous annealing furnace (the distance between centers of adjacent hearth rolls), T (MPa) represents a tension applied to the steel sheet during annealing, and Vc (°C/sec) represents the average cooling rate from completion of soaking to 650°C.
When PT exceeds 100, the deviation of the magnetic characteristics in the width direction can be reduced (1.10 or less). An upper limit of PT is not particularly limited, but may be, for example, 1000 or less. PT may be 200 or more, or 400 or more.
A reason why PT exceeds 100 will be described on the basis of Experimental Examples conducted by the present inventors.

(Experimental Example 1)

A slab containing, as a chemical composition, in % by mass, C: 0.001%, Si: 3.0%, Al: 0.50%, Mn: 0.2%, P: 0.010%, S: 0.0100%, N: 0.0010%, Ti: 0.0010%, and B: 0.0010% was heated to 1160°C, and then hot-rolled at a finish rolling temperature of 850°C to obtain a hot rolled sheet having a sheet thickness of 2.0 mm. This hot rolled sheet was coiled into a coil shape at 650°C (coiling temperature).
This coil was uncoiled, heated to 1000°C, held at the temperature for 60 seconds, and then coiled and air-cooled.
This coil was uncoiled, pickled, and then cold-rolled to obtain a cold rolled sheet having a sheet width of 1000 mm and a sheet thickness of 0.50 mm.
This cold rolled sheet was subjected to final annealing in which the cold rolled sheet was heated to 1000°C (soaking temperature) and held (soaked) for 30 seconds.
In the final annealing, a length L between hearth rolls in a soaking area was changed in a range from 2.0 to 5.0 m, a tension T applied to the steel sheet was changed from 2 to 6 N/mm², and an average cooling rate Vc from completion of soaking to 650°C was changed in a range from 4 to 10°C/sec.
A sample having a size of 55 mm square was sheared and collected from each of a W/10 part, a W/4 part, and a W/2 part of the steel sheet after final annealing, W10/400 (a measured value of iron loss at 400 Hz at a magnetic flux density of 1.0 T) was measured by a single sheet tester method (SST method) defined in JISC2556:2015, and a ratio between a maximum value WH and a minimum value WL of W10/400 was defined as a deviation of magnetic characteristics.

As a result, as illustrated in FIG, by setting PT to more than 100, WH/WL could be controlled to 1.10 or less.

Therefore, in the method for manufacturing the electrical steel sheet according to the present embodiment, final annealing step is performed such that PT exceeds 100.

A reason why it is preferable to increase the distance between the hearth rolls is expected that when the distance between the hearth rolls is increased, a catenary of the steel sheet in the width direction increases, and large strain is uniformly applied in the width direction. Residual strain caused by cooling is smaller than strain caused by catenary. Therefore, even when the residual strain caused by cooling is non-uniformly caused in the width direction, it is considered that an influence thereof is small.

A reason why it is preferable to increase the tension is considered that large strain is uniformly applied in the width direction by increasing the tension. Usually, when the tension is increased, catenary slightly decreases, but an influence of iron loss deterioration caused by extension of the steel sheet itself is large. The residual strain caused by cooling is smaller than the strain caused by increasing the tension. Therefore, even when the residual strain caused by cooling is non-uniformly caused in the width direction, it is considered that an influence thereof is small.

On the other hand, it is presumed that a reason why the average cooling rate up to 650°C is preferably low after soaking of final annealing is that the influence of the residual strain by cooling cannot be ignored when the average rate increases, whereby the deviation of magnetic characteristics in the width direction increases.

Even when a recrystallization ratio is controlled before the final annealing step by, for example, hot-rolled sheet annealing to reduce deviation of the recrystallization ratio depending due to the position of the steel sheet, the magnetic characteristics vary unless the subsequent steps are sufficiently controlled. Therefore, cold rolling conditions and final annealing are important.

In a case where a predetermined deviation of magnetic characteristics is achieved even when the sheet width is wider, the soaking temperature of the final annealing step is preferably increased, and is preferably, for example, 1000°C or higher.

When the deviation of low-magnetic field iron loss is reduced, PT is preferably 600 or more, and more preferably 700 or more.

[Insulating coating forming step]

To obtain the electrical steel sheet according to the present embodiment is a non-oriented electrical steel sheet including an insulating coating on a surface of a steel sheet (base steel sheet), in addition to the above steps, an insulating coating forming step of forming an insulating coating on a surface of the steel sheet after the final annealing step may be performed as in a conventional process of manufacturing a non-oriented electrical steel sheet. As conditions of the insulating coating forming step, similar conditions to those of an insulating coating forming step of a conventional non-oriented electrical steel sheet may be adopted.

Examples

A slab having an adjusted chemical composition was cast, then heated and hot-rolled under any of the conditions in Table 2 to form a hot rolled sheet, and then coiled.

The hot rolled sheet was subjected to hot-rolled sheet annealing under any of the conditions in Table 2, and cooled to room temperature.

Thereafter, the hot rolled sheet was pickled and cold-rolled to obtain a steel sheet (cold rolled sheet) having a sheet thickness of 0.25 to 0.50 mm.

This steel sheet (cold rolled sheet) was subjected to final annealing under any of the conditions illustrated in Table 2 to obtain a non-oriented electrical steel sheet. Insulating coatings were formed on surfaces of some of the non-oriented electrical steel sheets.

When a chemical composition of a steel sheet included in the obtained non-oriented electrical steel sheet was measured, the steel sheet contained the chemical components illustrated in Table 1, with the remainder being Fe and impurities.

For non-oriented electrical steel sheets (C1 to C20 and c1 to c20) having any of the chemical compositions illustrated in Table 1 and manufactured by any of the manufacturing methods illustrated in Table 2, W10/400 (a measured value of iron loss at 400 Hz at a magnetic flux density of 1.0 T) at each of a W/10 part, a W/4 part, and a W/2 part was measured by a single sheet tester method (SST method) defined in JISC2556:2015. At this time, a sample was collected for each of the W/10 part, the W/4 part, and the W/2 part at a certain position in a rolling direction, and the value thereof was defined as iron loss value at each position. **In** addition, WH/WL (the deviation of magnetic characteristics), which is a ratio between a maximum value WH and a minimum value WL of iron loss values at the positions, was calculated.

In some examples, a ratio WH2/WL2 between a maximum value WH2 and a minimum value WL2 of W5/400 was obtained as a deviation of magnetic characteristics of iron loss in a lower magnetic field.

The above measurement was performed three times at positions spaced apart by one hoop in the rolling direction, and values of WH/WL and WH2/WL2 at positions where WH/WL and WH2/WL2 are the largest are illustrated in Table. Table 3 indicates the results.

When the iron loss at each position was 25.0 W/kg or less and WH/WL was 1.10 or less, it was determined that magnetic characteristics were good and a deviation of the magnetic characteristics in the width direction was small.

[Table 1]

| Steel No. | Chemical composition (mass%) | | | | | | | | | | | |
|---|---|---|---|---|---|---|---|---|---|---|---|---|
| | C | Si | Mn | Al | P | S | N | Ti | B | Sb | Sn | Sn+2Sb |
| A1 | 0.0030 | 1.3 | 0.2 | 0.40 | 0.01 | 0.0020 | 0.0020 | 0.0010 | 0.0010 | - | - | - |
| A2 | 0.0020 | 1.0 | 0.3 | 0.50 | 0.01 | 0.0020 | 0.0010 | 0.0010 | 0.0010 | - | - | - |
| A3 | 0.0010 | 3.5 | 0.3 | 0.20 | 0.02 | 0.0010 | 0.0010 | 0.0010 | 0.0010 | - | - | - |
| A4 | 0.0010 | 2.9 | 0.1 | 0.80 | 0.03 | 0.0020 | 0.0010 | 0.0020 | 0.0010 | - | - | - |
| A5 | 0.0010 | 1.8 | 2.0 | 0.80 | 0.03 | 0.0020 | 0.0010 | 0.0020 | 0.0010 | - | - | - |
| A6 | 0.0020 | 3.1 | 0.2 | 0.10 | 0.02 | 0.0020 | 0.0010 | 0.0010 | 0.0010 | - | - | - |
| A7 | 0.0020 | 3.2 | 0.4 | 2.00 | 0.05 | 0.0010 | 0.0020 | 0.0010 | 0.0010 | - | - | - |
| A8 | 0.0010 | 2.8 | 1.2 | 0.20 | 0.20 | 0.0020 | 0.0020 | 0.0010 | 0.0020 | - | - | - |
| A9 | 0.0010 | 2.9 | 1.8 | 0.90 | 0.01 | 0.0030 | 0.0020 | 0.0010 | 0.0010 | - | - | - |
| A10 | 0.0020 | 1.8 | 1.2 | 1.20 | 0.05 | 0.0020 | 0.0030 | 0.0010 | 0.0010 | - | - | - |
| A11 | 0.0020 | 1.9 | 1.1 | 0.60 | 0.01 | 0.0020 | 0.0010 | 0.0030 | 0.0010 | - | - | - |
| A12 | 0.0010 | 1.5 | 0.4 | 0.90 | 0.01 | 0.0020 | 0.0010 | 0.0020 | 0.0020 | - | - | - |
| A13 | 0.0010 | 2.3 | 0.5 | 1.20 | 0.02 | 0.0010 | 0.0010 | 0.0020 | 0.0010 | 0.0015 | - | 0.003 |
| A14 | 0.0020 | 2.8 | 1.4 | 1.80 | 0.05 | 0.0010 | 0.0010 | 0.0020 | 0.0010 | - | 0.004 | 0.004 |
| A15 | 0.0020 | 2.5 | 1.3 | 0.40 | 0.01 | 0.0010 | 0.0020 | 0.0010 | 0.0010 | 0.0005 | 0.001 | 0.002 |
| A16 | 0.0020 | 3.1 | 1.2 | 0.30 | 0.04 | 0.0010 | 0.0020 | 0.0010 | 0.0020 | 0.0800 | 0.040 | 0.200 |
| A17 | 0.0020 | 2.9 | 0.9 | 0.70 | 0.05 | 0.0020 | 0.0020 | 0.0020 | 0.0010 | 0.0550 | 0.070 | 0.180 |
| A18 | 0.0020 | 1.9 | 0.6 | 1.10 | 0.06 | 0.0020 | 0.0020 | 0.0010 | 0.0010 | 0.0250 | 0.100 | 0.150 |
| a1 | 0.0090 | 1.2 | 0.2 | 1.20 | 0.03 | 0.0020 | 0.0010 | 0.0020 | 0.0010 | 0.0005 | 0.004 | 0.005 |
| a2 | 0.0020 | 0.1 | 1.2 | 1.10 | 0.03 | 0.0010 | 0.0020 | 0.0020 | 0.0010 | 0.0005 | 0.002 | 0.003 |
| a3 | 0.0020 | 4.5 | 1.4 | 0.50 | 0.04 | 0.0030 | 0.0020 | 0.0010 | 0.0010 | 0.0010 | 0.006 | 0.008 |
| a4 | 0.0010 | 3.1 | 0.01 | 0.60 | 0.02 | 0.0020 | 0.0020 | 0.0010 | 0.0010 | 0.0450 | 0.012 | 0.102 |
| a5 | 0.0020 | 2.4 | 3.2 | 1.20 | 0.08 | 0.0020 | 0.0010 | 0.0020 | 0.0010 | 0.0100 | 0.081 | 0.101 |
| a6 | 0.0010 | 3.2 | 0.5 | 0.02 | 0.04 | 0.0030 | 0.0010 | 0.0010 | 0.0010 | 0.0005 | 0.008 | 0.009 |
| a7 | 0.0020 | 3.1 | 0.9 | 3.20 | 0.05 | 0.0029 | 0.0020 | 0.0010 | 0.0010 | 0.0010 | 0.005 | 0.007 |
| a8 | 0.0010 | 2.3 | 1.1 | 1.50 | 0.30 | 0.0028 | 0.0020 | 0.0020 | 0.0010 | 0.0105 | 0.091 | 0.112 |
| a9 | 0.0020 | 2.4 | 1.5 | 1.20 | 0.11 | 0.0090 | 0.0020 | 0.0020 | 0.0010 | 0.0010 | 0.009 | 0.011 |
| a10 | 0.0020 | 2.5 | 1.8 | 1.80 | 0.12 | 0.0020 | 0.0200 | 0.0010 | 0.0010 | 0.0110 | 0.079 | 0.101 |
| a11 | 0.0010 | 2.1 | 1.2 | 1.10 | 0.12 | 0.0030 | 0.0010 | 0.0200 | 0.0010 | 0.0165 | 0.068 | 0.101 |
| a12 | 0.0020 | 1.8 | 1.9 | 1.90 | 0.08 | 0.0030 | 0.0010 | 0.0020 | 0.0200 | 0.0020 | 0.004 | 0.008 |

[Table 2]

| Manufacturing method No. | Hot rolling | | | Hot-rolled sheet annealing | | Cold rolling | | Final annealing | | | | | | | Parameter PT |
|---|---|---|---|---|---|---|---|---|---|---|---|---|---|---|---|
| | Slab heating temperature (°C) | Finish rolling final rolling temperature (°C) | Coiling temperature (°C) | Holding temperature (°C) | Holding time (sec) | Cold rolling reduction (%) | Sheet thickness (mm) | Soaking temperature (°C) | Soaking time (sec) | Average cooling rate Vc (°C/sec) | Sheet width W (mm) | Sheet thickness t (mm) | Interval between hearth rolls L(m) | Steel sheet tensile force T (MPa) | |
| B1 | 1100 | 900 | 680 | 890 | 120 | 82 | 0.50 | 990 | 60 | 9 | 920 | 0.50 | 2.0 | 5 | 511 |
| B2 | 1150 | 920 | 720 | 900 | 120 | 83 | 0.35 | 980 | 70 | 4 | 950 | 0.35 | 2.3 | 4 | 765 |
| B3 | 1160 | 920 | 780 | 920 | 170 | 85 | 0.35 | 1000 | 80 | 5 | 1030 | 0.35 | 2.5 | 5 | 901 |
| B4 | 1100 | 850 | 700 | 920 | 100 | 75 | 0.25 | 1020 | 60 | 6 | 1000 | 0.25 | 3.0 | 5 | 625 |
| B5 | 1150 | 829 | 800 | 930 | 110 | 75 | 0.35 | 1000 | 100 | 6 | 1100 | 0.35 | 2.5 | 4 | 642 |
| B6 | 1150 | 830 | 700 | 900 | 100 | 88 | 0.35 | 1000 | 65 | 6 | 1200 | 0.35 | 2.5 | 4 | 700 |
| B7 | 1160 | 850 | 680 | 950 | 120 | 88 | 0.35 | 1050 | 65 | 6 | 1300 | 0.35 | 2.4 | 4 | 728 |
| b1 | 1300 | 780 | 620 | 820 | 5 | 95 | 0.15 | 800 | 8 | 15 | 1010 | 0.15 | 2.2 | 3 | 67 |
| b2 | 1320 | 790 | 600 | 810 | 200 | 92 | 0.15 | 850 | 190 | 18 | 1030 | 0.15 | 1.4 | 2 | 24 |
| b3 | 1010 | 1050 | 950 | 1050 | 240 | 70 | 0.65 | 1200 | 195 | 20 | 920 | 0.65 | 1.6 | 2 | 96 |
| b4 | 1020 | 1040 | 950 | 1100 | 300 | 70 | 0.65 | 1250 | 200 | 30 | 950 | 0.65 | 1.1 | 2 | 45 |
| b5 | 1300 | 780 | 620 | 820 | 5 | 95 | 0.15 | 800 | 8 | 15 | 1200 | 0.20 | 2.2 | 3 | 106 |
| b6 | 1320 | 790 | 600 | 810 | 200 | 92 | 0.15 | 850 | 190 | 18 | 900 | 0.15 | 3.0 | 5 | 113 |
| b7 | 1100 | 850 | 700 | 920 | 100 | 75 | 0.25 | 1020 | 60 | 6 | 920 | 0.25 | 1.1 | 2 | 84 |
| b8 | 1150 | 829 | 800 | 930 | 110 | 75 | 0.35 | 1000 | 100 | 6 | 1000 | 0.20 | 1.5 | 1.5 | 75 |

[Table 3]

| | No. | Steel No. | Manufacturing method No. | Iron loss W10/400 | | | | Iron loss W15/50 | | | | Iron loss W5/400 | | | |
|---|---|---|---|---|---|---|---|---|---|---|---|---|---|---|---|
| | | | | W/10 part (W/kg) | W/4 part (W/kg) | W/2 part (W/kg) | Ratio WH/WL between maximum value and minimum value | W/10 part (W/kg) | W/4 part (W/kg) | W/2 part (W/kg) | Ratio between maximum value and minimum value | W/10 part (W/kg) | W/4 part (W/kg) | W/2 part (W/kg) | Ratio WH2/WL2 between maximum value and minimum value |
| Invention Example | C1 | A1 | B1 | 20.1 | 20.0 | 19.1 | 1.05 | - | - | - | - | 3.74 | 3.98 | 3.25 | 1.22 |
| | C2 | A2 | B2 | 21.0 | 21.0 | 20.2 | 1.04 | - | - | - | - | - | - | - | - |
| | C3 | A3 | B3 | 22.0 | 21.0 | 21.0 | 1.05 | - | - | - | - | - | - | - | - |
| | C4 | A4 | B4 | 21.0 | 20.0 | 19.3 | 1.09 | 2.00 | 2.15 | 2.11 | 1.08 | 3.82 | 3.52 | 3.50 | 1.09 |
| | C5 | A5 | B5 | 24.0 | 23.1 | 23.1 | 1.04 | - | - | - | - | - | - | - | - |
| | C6 | A6 | B1 | 21.0 | 20.0 | 20.0 | 1.05 | - | - | - | - | - | - | - | - |
| | C7 | A7 | B2 | 23.0 | 22.3 | 22.4 | 1.03 | - | - | - | - | - | - | - | - |
| | C8 | A8 | B3 | 22.0 | 21.3 | 21.2 | 1.04 | - | - | - | - | - | - | - | - |
| | C9 | A9 | B4 | 19.0 | 18.1 | 18.1 | 1.05 | 2.11 | 2.19 | 2.19 | 1.04 | 3.35 | 3.19 | 3.17 | 1.06 |
| | C10 | A10 | B5 | 19.0 | 18.6 | 19.0 | 1.02 | - | - | - | - | - | - | - | - |
| | C11 | A11 | B1 | 20.0 | 20.0 | 19.6 | 1.02 | - | - | - | - | - | - | - | - |
| | C12 | A12 | B2 | 21.0 | 20.4 | 20.9 | 1.03 | - | - | - | - | - | - | - | - |
| | C13 | A13 | B3 | 18.0 | 17.9 | 17.3 | 1.04 | - | - | - | - | - | - | - | - |
| | C14 | A14 | B4 | 18.0 | 16.5 | 17.1 | 1.09 | 1.98 | 2.14 | 2.01 | 1.08 | 3.09 | 2.81 | 2.88 | 1.10 |
| | C15 | A15 | B5 | 19.0 | 20.1 | 20.5 | 1.08 | - | - | - | - | - | - | - | - |
| | C16 | A16 | B1 | 21.0 | 19.1 | 19.6 | 1.07 | - | - | - | - | - | - | - | - |
| | C17 | A17 | B2 | 22.0 | 22.9 | 22.2 | 1.04 | - | - | - | - | - | - | - | - |
| | C18 | A18 | B3 | 24.0 | 23.1 | 22.2 | 1.08 | - | - | - | - | - | - | - | - |
| | C19 | A18 | B6 | 19.8 | 19.9 | 19.7 | 1.01 | 2.10 | 2.10 | 2.12 | 1.01 | 3.82 | 3.58 | 3.49 | 1.09 |
| | C20 | A18 | B7 | 19.7 | 19.9 | 19.7 | 1.01 | - | - | - | - | 3.82 | 3.61 | 3.50 | 1.09 |
| Comparative Example | c1 | a1 | b1 | 23.0 | 19.3 | 19.0 | 1.21 | 1.82 | 1.81 | 1.77 | 1.03 | - | - | - | - |
| | c2 | a2 | b2 | 24.0 | 18.2 | 19.1 | 1.32 | 1.82 | 1.71 | 1.80 | 1.06 | - | - | - | - |
| | c3 | a3 | b3 | 20.0 | 19.1 | 13.9 | 1.44 | 3.22 | 3.22 | 3.04 | 1.06 | - | - | - | - |
| | c4 | a4 | b4 | 18.0 | 17.1 | 11.8 | 1.52 | 3.24 | 3.22 | 3.11 | 1.04 | - | - | - | - |
| | c5 | a5 | b1 | 19.0 | 14.4 | 15.2 | 1.32 | 1.83 | 1.77 | 1.83 | 1.03 | - | - | - | - |
| | c6 | a6 | b2 | 21.0 | 14.8 | 13.5 | 1.56 | 1.82 | 1.79 | 1.77 | 1.03 | - | - | - | - |

| | No. | Steel No. | Manufacturing method No. | W/10 part | W/4 part | W/2 part | Ratio | W/10 part | W/4 part | W/2 part | Ratio | W/10 part | W/4 part | W/2 part | Ratio |
|---|---|---|---|---|---|---|---|---|---|---|---|---|---|---|---|
| | c7 | a7 | b3 | 24.0 | 14.9 | 15.1 | 1.61 | 3.23 | 3.11 | 3.10 | 1.04 | - | - | - | - |
| | c8 | a8 | b4 | 25.0 | 23.1 | 11.9 | 2.10 | 3.24 | 3.11 | 3.01 | 1.08 | - | - | - | - |
| | c9 | a9 | b1 | 12.0 | 25.6 | 19.0 | 2.13 | 1.81 | 1.98 | 1.83 | 1.09 | - | - | - | - |
| | c10 | a10 | b2 | 25.0 | 11.4 | 13.2 | 2.20 | 1.93 | 1.81 | 1.81 | 1.07 | - | - | - | - |
| | c11 | a11 | b3 | 20.0 | 10.1 | 12.3 | 1.98 | 3.42 | 3.22 | 3.22 | 1.06 | - | - | - | - |
| | c12 | a12 | b4 | 19.0 | 10.6 | 12.3 | 1.80 | 3.31 | 3.12 | 3.22 | 1.06 | - | - | - | - |
| | c13 | A1 | b1 | 20.0 | 11.0 | 12.3 | 1.82 | 2.01 | 1.87 | 1.88 | 1.07 | - | - | - | - |
| | c14 | A2 | b2 | 21.0 | 12.3 | 12.3 | 1.71 | 1.91 | 1.81 | 1.81 | 1.06 | - | - | - | - |
| | c15 | A3 | b5 | 21.0 | 19.1 | 18.9 | 1.11 | 1.91 | 1.85 | 1.85 | 1.03 | - | - | - | - |
| | c16 | A4 | b6 | 22.0 | 19.6 | 21.3 | 1.12 | 1.98 | 1.86 | 1.86 | 1.06 | - | - | - | - |
| | c17 | A5 | b7 | 22.0 | 19.5 | 21.2 | 1.13 | 1.98 | 1.88 | 1.91 | 1.05 | - | - | - | - |
| | c18 | A6 | b8 | 23.0 | 20.2 | 19.0 | 1.21 | 2.23 | 2.11 | 2.11 | 1.06 | - | - | - | - |
| | c19 | a1 | B1 | 22.0 | 11.7 | 12.3 | 1.88 | 3.11 | 3.03 | 3.03 | 1.03 | - | - | - | - |
| | c20 | a2 | B2 | 23.0 | 12.0 | 12.3 | 1.91 | 2.09 | 1.99 | 1.99 | 1.05 | - | - | - | - |

As illustrated in Tables 1 to 3, in a steel sheet having a predetermined chemical composition and subjected to final annealing under a condition that the parameter PT of the final annealing conditions exceeded 100, the magnetic characteristics were good and the deviation in the width direction was small. **In** addition, when PT was higher, the deviation of iron loss in the width direction was small even in a low magnetic field. In addition, in a case where a soaking temperature of the final annealing was high, the deviation of iron loss in the width direction was small even when the steel sheet was wide.

On the other hand, in Comparative Examples in which a chemical composition was out of the range of the present invention and/or a manufacturing method was out of a preferred range, the deviation of magnetic characteristics (iron loss) in the width direction was large.

Industrial Applicability

According to the present invention, it is possible to manufacture a non-oriented electrical steel sheet having good magnetic characteristics and a small deviation of magnetic characteristics in a width direction.

Such a non-oriented electrical steel sheet can suppress cogging torque, that is, rotation unevenness when stacked into a motor, and therefore is highly industrially applicable.

**Claims**

1.　A non-oriented electrical steel sheet comprising a steel sheet, wherein

the steel sheet contains, as a chemical composition, in % by mass,
C: 0.0030% or less,
Si: 1.0 to 3.5%,
Al: 0.10 to 2.00%,
Mn: 0.1 to 2.0%,
P: 0.20% or less,
S: 0.0030% or less,
N: 0.0030% or less,
Ti: 0.0030% or less,
B: 0.0020% or less,
Sn: 0 to 0.200%,
Sb: 0 to 0.1000%, and
a remainder: Fe and impurities,
when a Sn content is represented by [Sn] and an Sb content is represented by [Sb] in % by mass, the following formula (1) is satisfied, and
when a sheet width of the steel sheet is represented by W, WH/WL, which is a ratio between a maximum value WH and a minimum value WL of iron loss W10/400 at a W/10 part, a W/4 part, and a W/2 part which are a part at a W/10 position, a part at a W/4 position, and a part at a W/2 position of the sheet width from an end portion in a width direction respectively, is 1.10 or less.

$$[Sn] + 2 \times [Sb] \leq 0.200 \quad (1)$$

2. The non-oriented electrical steel sheet according to claim 1, wherein
the [Sn] and the [Sb] satisfy the following formula (2).

$$0.020 \leq [Sn] + 2 \times [Sb] \leq 0.200 \quad (2)$$

3. The non-oriented electrical steel sheet according to claim 1 or 2, wherein
an insulating coating is formed on a surface of the steel sheet.

# FIG. 1

## INTERNATIONAL SEARCH REPORT

| International application No. |
| --- |
| **PCT/JP2023/035618** |

| A. | CLASSIFICATION OF SUBJECT MATTER |
| --- | --- |

*C21D 8/12*(2006.01)n; *C22C 38/00*(2006.01)i; *C22C 38/60*(2006.01)i; *H01F 1/147*(2006.01)i
FI:   C22C38/00 303U; C22C38/60; H01F1/147 183; C21D8/12 A

According to International Patent Classification (IPC) or to both national classification and IPC

| B. | FIELDS SEARCHED |
| --- | --- |

Minimum documentation searched (classification system followed by classification symbols)

C21D8/12; C21D9/46; C22C38/00-C22C38/60; H01F1/147

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | JP 11-222653 A (NIPPON STEEL CORP) 17 August 1999 (1999-08-17)<br>claims, paragraphs [0001]-[0004], [0011]-[0012], [0014], [0019], [0025], [0028], tables 1, 3-4 | 1-3 |
| Y | JP 63-47333 A (NIPPON STEEL CORP) 29 February 1988 (1988-02-29)<br>claims, p. 3, lower left column, line 15 to p. 4, upper left column, line 1 | 1-3 |
| Y | WO 2016/002904 A1 (NIPPON STEEL & SUMITOMO METAL CORP) 07 January 2016 (2016-01-07)<br>claims, paragraphs [0002]-[0005], [0021]-[0022], [0027], [0034], [0064] | 2 |
| A | | 1, 3 |
| A | JP 2011-256437 A (JFE STEEL CORP) 22 December 2011 (2011-12-22)<br>entire text, all drawings | 1-3 |
| A | JP 2001-131636 A (NIPPON STEEL CORP) 15 May 2001 (2001-05-15)<br>entire text | 1-3 |
| A | CN 106282781 A (NORTHEASTERN UNIVERSITY) 04 January 2017 (2017-01-04)<br>entire text, all drawings | 1-3 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **11 December 2023** | **19 December 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

EP 4 596 728 A1

## INTERNATIONAL SEARCH REPORT
### Information on patent family members

International application No.

**PCT/JP2023/035618**

| Patent document cited in search report | | | Publication date (day/month/year) | Patent family member(s) | Publication date (day/month/year) |
|---|---|---|---|---|---|
| JP | 11-222653 | A | 17 August 1999 | (Family: none) | |
| JP | 63-47333 | A | 29 February 1988 | (Family: none) | |
| WO | 2016/002904 | A1 | 07 January 2016 | US 2017/0194082 A1 claims, paragraphs [0002]-[0010], [0101]-[0104], [0113]-[0114], [0127]-[0128], [0160] EP 3165624 A1 TW 201606093 A KR 10-2017-0002605 A CN 106661686 A MX 2016015754 A BR 112016028787 A2 PL 3165624 T3 | |
| JP | 2011-256437 | A | 22 December 2011 | WO 2011/155183 A1 entire text, all drawings TW 201207121 A | |
| JP | 2001-131636 | A | 15 May 2001 | (Family: none) | |
| CN | 106282781 | A | 04 January 2017 | (Family: none) | |

Form PCT/ISA/210 (patent family annex) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022157340 A
- JP H07054052 A
- JP H09316536 A